# FASCICULE DE BREVET EUROPEEN

(11) **EP 1 731 918 B1**
(45) Date de publication et mention de la délivrance du brevet: **09.11.2016**
(21) Numéro de dépôt: 06114967.0
(22) Date de dépôt: 05.06.2006
(51) Int. Cl.: G01S 19/05, G01S 19/25, G01S 5/00

(54) **Procede d'acquisition de signaux dans un systeme global de navigation par satellite et dispositif de mise en oeuvre**
Verfahren zur Erfassung von Signalen in einem globalen Satellitennavigationssystem und Vorrichtung zur Umsetzung dieses Verfahrens
Signal acquisition method in a satellite global navigation system and implementation device

(30) Priorité: 07.06.2005 FR 0551526
(43) Date de publication de la demande: 13.12.2006
(73) Titulaire: ALCATEL LUCENT, 92100 Boulogne-Billancourt (FR)
(72) Inventeur: OSTER, Yann, 31037, TOULOUSE (FR)
(74) Mandataire: Berthier, Karine

(56) Documents cités:
- US-A1- 2002 135 511
- US-A1- 2003 163 256
- US-A1- 2005 153 730
- US-A1- 2005 227 709
- US-B1- 6 788 249

## Description

L'invention concerne un procédé d'acquisition de signaux dans un système global de navigation par satellites (GNSS : Global Navigation Satellite System).

Dans un système GNSS, GPS ou autre, les satellites d'une constellation diffusent un signal transportant une information de datation très précise car cette information est obtenue à partir d'une horloge atomique à bord de chaque satellite. Ce signal sera dénommé par la suite signal de navigation. Un signal de navigation résulte de la modulation d'une porteuse par un code pseudo-aléatoire d'étalement et éventuellement par un message de navigation. Le code d'étalement permet de distinguer les différents signaux de navigation.

Le récepteur d'un terminal de navigation doit acquérir les signaux de navigation d'au moins trois satellites afin de déterminer sa position en trois dimensions, dans un système global de coordonnées absolues.

Sans connaissance précise du temps universel, le récepteur d'un terminal de navigation doit acquérir un quatrième signal de navigation.

De façon pratique, un calcul complexe exploitant les informations transmises par les signaux acquis permet au terminal de déterminer son positionnement et donc de répondre au problème de la localisation.

Ce n'est pas ce problème que l'on cherche à résoudre avec la présente invention mais celui de l'acquisition du signal émis par un satellite en vue.

En effet, une phase préliminaire à la localisation consiste, pour un terminal, en l'acquisition des signaux de navigation diffusés par les satellites afin de pouvoir mettre en oeuvre les calculs de localisation utilisant ces signaux. Cette phase est dénommée phase d'acquisition des signaux de navigation et comporte également des calculs. L'invention concerne cette phase préliminaire.

La présente invention concerne l'acquisition des signaux de type GNSS émis par les satellites pour un terminal récepteur (dit terminal de navigation).

L'acquisition des signaux GNSS consiste en une exploration en temps et en fréquence, par corrélation du signal reçu avec une réplique du signal recherché, sur une durée déterminée fonction du rapport signal sur bruit S/N. Un faible rapport S/N nécessite une plus grande durée de corrélation, qui induit une plus grande résolution en pas de fréquence, et donc un plus grand nombre de fréquences à explorer pour une même dynamique en Doppler (Phénomène Doppler lié au déplacement du satellite et /ou du terminal).

Cependant la durée de corrélation reste limitée par la précision de la référence de fréquence du terminal.

Par la suite, on appellera paramètres de syntonisation pour un signal de navigation : la fréquence porteuse et la phase du code d'étalement relativement à une référence de fréquence et de temps.

Le problème principal de l'acquisition des signaux de navigation pour un terminal de navigation est celui de la multitude de traitements à réaliser, et ce d'autant plus que le rapport signal sur bruit est faible.

Une première solution connue pour résoudre ce problème consiste à augmenter le nombre de corrélateurs fonctionnant en parallèle au sein de chaque terminal. Les inconvénients de cette solution résident dans l'augmentation de la complexité logique des circuits électroniques et dans l'augmentation de la dissipation du récepteur.

Une deuxième solution connue, consiste à faire appel à une station de base pour fournir une assistance au terminal. Cette assistance consiste à communiquer au terminal l'identification des satellites en visibilité et les paramètres de syntonisation pour les signaux de navigation associés à ces satellites.

La référence de temps/fréquence de la station de base doit être diffusée aux terminaux pour leur permettre d'exploiter ces informations d'assistance. La communication entre la station de base et les terminaux est réalisée par une liaison radio fréquence (RF) au moyen d'une liaison cellulaire ou autre et permet la transmission des informations d'assistance et de synchronisation temps/fréquence.

L'inconvénient de cette deuxième solution est la sensibilité au brouillage de la liaison radio fréquence, notamment pour la transmission de la référence de temps/fréquence. D'autre part, une telle liaison nécessite une bande passante particulièrement large (de l'ordre de 100 MHz pour une synchronisation temporelle à quelques dizaines de nano-secondes près) pour transmettre une synchronisation temps/fréquence précise.

Par ailleurs, la station de base fournissant l'assistance doit acquérir préalablement les signaux de navigation des satellites en vue alors qu'elle est sensible au brouillage au même titre que les terminaux qu'elle assiste.

L'acquisition des signaux de navigation avec un faible rapport signal sur bruit, et sous un délai acceptable (de l'ordre de quelques dizaines de secondes) reste donc problématique. La phase d'acquisition représente une grosse charge de traitements, et ce d'autant plus que le rapport signal sur bruit est faible.

Une autre solution est proposée dans le document US 2003/163256 A1 (EDWARDS STEPHEN J ET AL) 28 août 2003, qui expose un réseau de récepteurs de navigation par satellite comprenant un serveur connecté à Internet.

Une autre solution est également proposée dans le document US 2005/153730 A1 (TURETZKY GREGORY ET AL) 14 juillet 2005, qui décrit un dispositif communicant comprenant un émetteur-récepteur accordable.

Une autre solution connue est aussi abordée dans le document US 2005/227709 A1 (CHANG STEVE ET AL) 13 octobre 2005, qui expose un procédé pour fournir des informations de localisation sur un réseau.

Une autre solution est aussi proposée dans le document US 2002/135511 A1 (ZHAO YILIN ET AL) 26 septembre 2002, qui expose un système de positionnement par satellite et récepteurs mobiles.

Aucune solution connue ne procure des performances satisfaisantes (en termes de temps d'acquisition, probabilité de non acquisition, probabilité de fausse acquisition, puissance de calcul requise) pour l'acquisition des signaux de navigation lorsque le rapport signal sur bruit est faible.

Le problème posé par la présente invention est celui de l'amélioration des performances de la phase d'acquisition des signaux de navigation, quelque soit le rapport signal sur bruit et sans augmentation de la puissance de calcul des terminaux de navigation.

Ce problème est résolu selon l'invention, par la constitution d'un réseau de terminaux en proximité communiquant par un canal de type liaison radiofréquence afin d'établir une collaboration pour effectuer les calculs de mise en oeuvre de la phase d'acquisition.

Les terminaux sont en proximité lorsqu'ils sont à quelques longueurs d'ondes de la modulation par le code d'étalement, terme qui est défini par le vocable longueur de « chip ». A titre d'exemple la longueur de chip est de 300m pour le système GPS pour une fréquence de modulation de 1,023MHz.

Cette solution permet d'avoir la sensibilité requise sans augmenter pour autant la durée de cette phase d'acquisition, une robustesse au brouillage et une rapidité d'acquisition par rapport aux méthodes existantes.

Cette solution permet aussi d'assister de façon locale et autonome la syntonisation d'un terminal entrant dans le réseau, pour les différents signaux de navigation qui ont déjà été syntonisés par le réseau.

Réciproquement, le réseau peut hériter des paramètres de syntonisation acquis par un terminal entrant dans le réseau.

La présente invention a plus particulièrement pour objet un procédé d'acquisition par des terminaux de navigation, de signaux de navigation diffusés par des satellites d'un système global de navigation GNSS (Global Navigation Satellite System) principalement caractérisé en ce qu'il comprend :
- Une communication d'informations à travers un canal de communication, entre plusieurs terminaux en proximité ayant une synchronisation temporelle et fréquentielle constituant une référence commune, ces terminaux formant ainsi un réseau synchronisé;
- Et, pour chaque satellite en vue, une collaboration entre terminaux du réseau ainsi formé pour déterminer les paramètres de syntonisation du signal de navigation relativement à la référence commune de temps et de fréquence, cette collaboration comportant :
   - une gestion du partage de leurs ressources respectives de manière à ce que chacun contribue aux calculs entrant dans la détermination des paramètres de syntonisation du signal de navigation;
   - la transmission par le canal de communication, des résultats obtenus pour l'obtention des paramètres de syntonisation de ce signal afin que les terminaux du réseau se syntonisent sur le signal du satellite en vue.

La gestion du partage des ressources comprend l'allocation d'une ou plusieurs tâches d'exploration en fonction des ressources de chaque terminal.

L'allocation des tâches d'exploration comporte un partage de l'espace de recherche global en temps et en fréquence.

Le partage de l'espace de recherche global en temps et en fréquence comporte des plages de recouvrement.

Le partage de l'espace de recherche en fréquence comprend la division en sous ensembles d'une plage de fréquences dans laquelle est susceptible d'être reçu le signal de navigation d'un satellite en vue.

Le partage de l'espace de recherche en temps comprend la division en sous ensembles d'une plage temporelle dans laquelle est susceptible de se trouver la phase du code d'étalement utilisé pour moduler la porteuse émise par un satellite en vue, relativement à une référence de temps.

Avantageusement, dans un mode de réalisation, la gestion du partage des ressources est réalisée par un terminal maître apte à fractionner et à répartir de façon optimale les traitements entrant dans la mise en oeuvre d'une phase d'acquisition du signal de navigation, sur l'ensemble des ressources de calcul disponibles;
- la transmission par le canal de communication comprend la transmission des résultats de traitements partiels par les différents terminaux du réseau afin que le terminal maître du réseau détermine les paramètres de syntonisation du signal de navigation et,
- cette transmission comprend également la transmission des paramètres de syntonisation du signal de navigation par le canal de communication, du terminal maître vers les autres terminaux du réseau afin d'assister la syntonisation de l'ensemble des terminaux sur le satellite en vue.

Dans une variante de ce mode de réalisation, la gestion du partage des ressources comprend un terminal maître principal et un ou plusieurs terminaux maîtres secondaires aptes à se substituer au terminal maître principal en cas d'indisponibilité du terminal maître principal.

La communication d'informations comprend en outre une communication d'informations d'assistance telles qu'une identification des satellites en vue, les signaux de syntonisation à savoir la fréquence et la phase de code des satellites en vue, et lorsqu'un message de navigation a été utilisé, ledit message de navigation.

La communication d'informations comprend également :
- une gestion de l'entrée et de la sortie d'un terminal du réseau et l'évaluation de sa proximité;
- l'assistance étant une assistance du réseau vers un terminal entrant, ou d'un terminal entrant vers le réseau.

L'assistance peut comprendre la communication par une station de base distante du message de navigation au réseau.

Dans une variante du procédé, la communication d'informations comprend un service de relais permettant d'acheminer les informations entre des terminaux éloignés du réseau en point à point, à travers des terminaux du réseau qui assurent alors en outre la fonction de relais de transmission.

La synchronisation temporelle des terminaux peut être réalisée au moyen d'une référence temps absolue ou relative.

L'invention a également pour objet un terminal de navigation par satellite au moyen d'un système global de navigation GNSS (Global Navigation Satellite System), principalement caractérisé en ce qu'il comprend :
- un émetteur/récepteur lui permettant de communiquer en réseau à travers un canal de communication avec d'autres terminaux en proximité pour transmettre des informations permettant une collaboration entre terminaux dans l'acquisition du signal de navigation émis par tout satellite en vue,
- une référence de temps/fréquence pour une synchronisation temporelle et fréquentielle avec les autres terminaux du réseau;
- un module de calcul apte à mettre en oeuvre une ou plusieurs tâches d'une phase d'acquisition en vue de l'acquisition d'un signal de navigation d'un satellite en vue,
- un module de gestion des informations communiquées, pour piloter le module de calcul afin de définir la ou les tâches à mettre en oeuvre, selon les informations communiquées par les terminaux du réseau.

L'émetteur/récepteur est en outre apte à recevoir ou à envoyer des informations d'assistance.

Le module de gestion peut comporter une fonction relais de transmission pour le réseau constitué.

La référence temps/fréquence de chaque terminal peut être réalisée par une horloge atomique miniaturisée.

L'invention a également pour objet un réseau de terminaux de navigation par satellite au moyen d'un système global de navigation GNSS (Global Navigation Satellite System), principalement caractérisé en ce qu'il comprend plusieurs terminaux tels que décrits, ledit réseau étant apte à mettre en oeuvre le procédé d'acquisition de signaux de navigation de tout satellite en vue, décrit ci-dessus.

D'autres particularités et avantages de l'invention apparaîtront clairement à la lecture de la description qui est faite ci-après et qui est donnée à titre d'exemple illustratif et non limitatif et en regard des figures sur lesquelles :
- la figure 1 représente un schéma d'un réseau de terminaux aptes à mettre en oeuvre le procédé d'acquisition selon l'invention,
- la figure 2 représente le schéma de réalisation de d'un terminal selon l'invention.

Comme on va le voir dans ce qui suit, le procédé d'acquisition selon l'invention permet d'augmenter les performances d'acquisition grâce à la constitution d'un réseau de terminaux et au partage de leur ressources ainsi qu'une assistance bidirectionnelle du réseau vers un terminal entrant ou d'un terminal entrant vers le réseau simplifiant ainsi l'acquisition dans certaines circonstances. Une assistance au moyen d'une station de base est également prévue pour de très faibles rapports signal sur bruit.

Ce procédé est mis en oeuvre par un réseau de terminaux de navigation synchronisés décrit dans la suite.

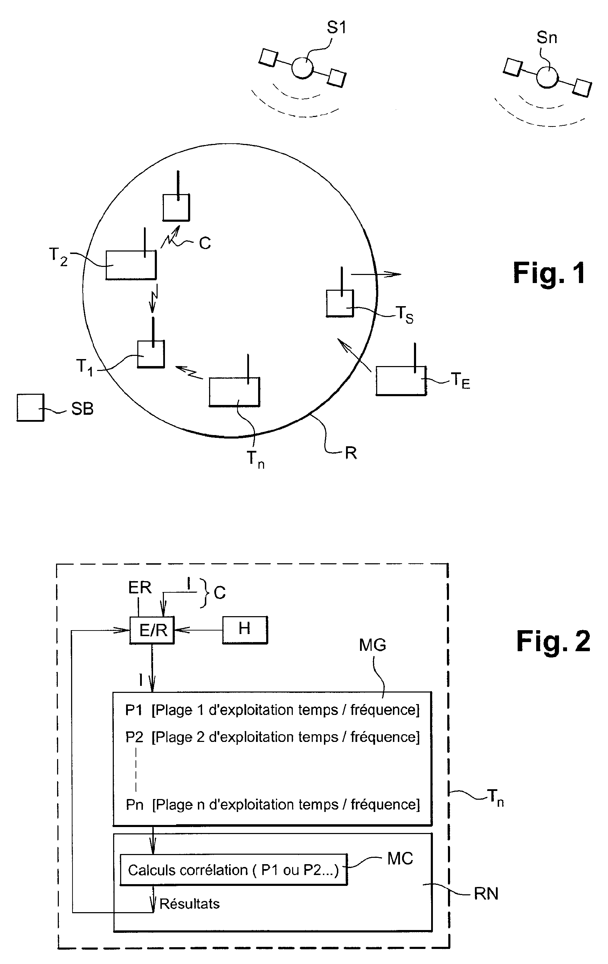

Les terminaux de navigation T1 à Tn illustrés sur la figure 1, représentent des terminaux en proximité formant un réseau R au sens de la présente invention. Le réseau R est formé par plusieurs terminaux ayant une synchronisation temporelle et fréquentielle, et aptes à communiquer des informations à travers un canal de communication C de type liaison radiofréquence.

Le terminal TE représente un terminal entrant dans le réseau tandis que le terminal TS représente un terminal sortant. Ce réseau R a en vue un satellite S1 d'un système global de navigation, le satellite Sn n'étant pas encore en vue.

On va maintenant se reporter au schéma de réalisation d'un terminal de navigation Tn représenté sur la figure 2.

Chaque terminal T1...Tn représenté sur la figure 1 et réalisé sur le principe du schéma de la figure 2.

Ainsi chaque terminal est équipé d'un émetteur/récepteur ER lui permettant de communiquer en réseau et d'une référence de temps/fréquence ultra-stable H. Il s'agit par exemple d'une horloge atomique miniaturisée.

Chaque terminal comporte en outre un dispositif de radionavigation RN comportant notamment un module de calcul de corrélation MC. Le module de calcul MC est apte à mettre en oeuvre les calculs de corrélation classiques entrant dans la mise en oeuvre de l'acquisition du signal de navigation d'un satellite en vue. Cependant, selon l'invention, le module MC de chaque terminal ne fait pas tous les calculs puisque ces calculs sont répartis sur l'ensemble des terminaux du réseau comme expliqué dans ce qui suit.

Le dispositif de radionavigation RN est classique et par conséquent non détaillé ici. Le terminal comporte en outre selon l'invention, un module de gestion MG des informations I communiquées par le réseau à travers le canal de communication C.

La communication entre les terminaux permet de transmettre des informations I concernant la disponibilité de ressource de chaque terminal du réseau ainsi que des informations d'assistance.

Les informations reçues par un terminal sont exploitées par son module de gestion MG pour piloter le module de calcul MC afin de réaliser une collaboration entre terminaux. Cette collaboration consiste en un partage des ressources de calcul pour la mise en oeuvre de la phase d'acquisition du signal émis par le satellite en vue.

Le partage des ressources se traduit par un partage des tâches de calcul couvrant l'espace de recherche global en temps et en fréquence.

Le calcul peut être par exemple divisé en n tâches P1...Pn correspondant chacune à une plage d'exploration temps/fréquence. Un terminal disposant de ressources de calcul conséquentes peut être chargé de plusieurs tâches de traitements. Deux plages d'exploration contiguës en temps ou en fréquence partagent une zone de recouvrement afin de prendre en compte les incertitudes de synchronisation en temps/fréquence sur les terminaux, ainsi que l'effet de la distance entre les terminaux sur l'estimation de la phase relative du code d'étalement.

Une plage d'exploration en fréquence correspond à un sous-ensemble de la plage des fréquences Fmin-Fmax dans laquelle la porteuse du signal de navigation est susceptible d'être reçue, compte tenu de l'effet Doppler.

Une plage d'exploration en temps comprend la division en sous ensembles d'une plage temporelle dans laquelle est susceptible de se trouver la phase du code d'étalement du signal de navigation reçu, relativement à la référence de temps modulo la période du code d'étalement.

Dans un mode de réalisation pratique, il est prévu que l'un des terminaux du réseau constitué devienne maître. Dans ce cas, son module de gestion MG décide de l'allocation des tâches pour chaque terminal en fonction des informations reçues.

De préférence, le terminal maître assure une gestion, coordonnée du partage des ressources respectives des terminaux du réseau de manière à fractionner et à répartir de façon optimale les traitements entrant dans la mise en oeuvre d'une phase d'acquisition du signal de navigation, sur l'ensemble des ressources de calcul disponibles.

Les résultats de traitements partiels sont transmis sur le canal de communication par les différents terminaux du réseau de manière à ce que le terminal maître du réseau détermine les paramètres de syntonisation du signal de navigation.

Le terminal maître est alors en mesure de transmettre les paramètres de syntonisation du signal de navigation par le canal de communication, aux autres terminaux du réseau afin d'assister la syntonisation de l'ensemble des terminaux sur le satellite en vue.

Dans une variante de réalisation, un terminal maître principal et un ou plusieurs terminaux maîtres secondaires peuvent être prévus. Dans ce cas, le ou les terminaux maîtres secondaires sont prévus pour réaliser d'une manière redondante des opérations effectuées par le terminal maître (tâche d'allocation et choix des paramètres de syntonisation) afin de le surveiller et de pouvoir se substituer à ce dernier en cas d'indisponibilité de ce dernier (défaillance ou sortie du réseau).

Le choix du terminal maître pour le réseau synchronisé constitué peut être fait par arbitrage entre les terminaux, ces derniers communiquant pour cela au moyen du canal de communication.

Dans un autre mode de réalisation l'allocation des ressources peut être réalisée au terme de plusieurs échanges d'informations afin que les terminaux se coordonnent, chacun prenant en charge une ou plusieurs tâches sans connaissance des disponibilités de chacun.

La synchronisation temporelle des terminaux du réseau peut être réalisée de deux façons selon la référence de temps utilisée. En effet, cette référence de temps peut être absolue ou relative.

Dans le cas d'une référence de temps absolue, les terminaux disposent de la référence de temps universel.

Dans le cas d'une référence de temps relative, les terminaux disposent chacun d'une référence de temps locale synchronisée par l'envoi d'un top (par une liaison RF par exemple).

Le fonctionnement pratique est le suivant :
- Lorsque les terminaux du réseau et par conséquent le réseau n'est pas syntonisé sur le satellite en vue, les terminaux se coordonnent pour répartir les traitements nécessaires à l'acquisition du signal de navigation, avec un recouvrement des plages d'exploration ;
- Les résultats de corrélation sont ensuite diffusés au moyen du canal de communication, ainsi que les conclusions de la phase d'acquisition pour ce signal de navigation.
- L'ensemble des terminaux du réseau utilise ces paramètres de syntonisation pour finaliser la syntonisation sur le signal de navigation,
- Le réseau est alors syntonisé sur le satellite en vue.
- Les étapes sont réitérées pour tout nouveau satellite en vue.
- Lorsqu'un terminal entre dans un réseau syntonisé sur les satellites en vue, ce terminal bénéficie de l'assistance du réseau. Il s'agit d'une assistance en identification, en phase du code et en fréquence pour les divers satellites en vue. L'acquisition pour le terminal entrant est alors extrêmement rapide, n'ayant à explorer que quelques valeurs de temps/fréquence autour des valeurs communiquées par l'assistance, compte-tenu de sa proximité avec les autres terminaux du réseau et de la précision de synchronisation en temps/fréquence.
- Réciproquement, un réseau constitué peut profiter des paramètres de syntonisation estimés préalablement par un terminal entrant, pour des satellites sur lesquels le réseau n'est pas encore syntonisé. Dans ce cas, c'est le réseau qui bénéficie de l'assistance d'un terminal entrant.

Dans une variante de mise en oeuvre du procédé, pour de très faibles rapports S/B (inférieurs à 35 dBHz par exemple), on peut augmenter la durée de corrélation cohérente au-delà de la période symbole de la modulation par le message de navigation (20 ms pour le GPS), en communiquant le message de navigation des divers satellites. Cette communication est faite à partir d'une station distante SB bénéficiant d'un bon rapport S/B (de l'ordre de 50 dBHz par exemple). Dans ce cas, les terminaux devront disposer d'une mémoire tampon pour mémoriser les échantillons du signal reçu afin de supprimer en temps différé la modulation par le message de navigation.

Les instants de transition des bits du message de navigation sont alors connus à une fraction de ms prés selon la distance de la station de référence. Les terminaux du réseau peuvent alors étendre la durée de corrélation cohérente sur plus d'un temps bit du message de navigation (20ms pour le GPS), en respectant des temps de garde autour des instants de transition pour prendre en compte les incertitudes sur la synchronisation temporelle et sur la distance séparant la station de base des terminaux.

Ainsi, dans cette variante de réalisation, la station de base distante SB, disposant aussi d'une synchronisation temps très précise fournit une assistance au réseau en communiquant le message de navigation c'est-à-dire le deuxième signal modulant la porteuse. Les terminaux peuvent alors soustraire ce signal du signal reçu et faire de l'intégration cohérente sur plus qu'une période symbole de la modulation par le message de navigation.

Cette variante de réalisation permet d'enlever la limite du temps bit, la période d'intégration pouvant alors être supérieure à 20ms dans le cas du GPS.

Dans une autre variante du procédé, il peut être prévu que les terminaux assurent en outre une fonction de relais de transmission de manière à reculer les limites de la portée du canal de transmission. Ainsi, un service relais est mis en place et permet d'acheminer les communications point à point lorsque deux terminaux du réseau sont trop éloignés.

Ainsi, l'utilisation dans les terminaux de références de temps/fréquence ultra-stables (telles que des horloges atomiques) permet d'augmenter sensiblement la durée de corrélation par rapport à un récepteur GNSS classique.

En outre, le procédé selon l'invention permet, du fait du partage des calculs entre plusieurs terminaux, de réduire le temps d'acquisition, d'augmenter la durée de corrélation et donc d'augmenter la sensibilité, sans augmentation directe de la capacité de calcul au niveau du terminal.

Il permet également de présenter une robustesse au brouillage, une rapidité d'acquisition ainsi qu'une diminution du nombre de satellites, 3 au lieu de 4, pour réaliser la localisation c'est-à-dire de disposer du point lorsque la référence de temps utilisée pour la synchronisation temporelle est une référence absolue.

Il permet aussi une meilleure précision du point, le temps étant très bien connu.

## Revendications

1. Procédé d'acquisition par des terminaux (T1; Tn) de navigation, de signaux de navigation diffusés par des satellites d'un système global de navigation GNSS, ledit procédé comprenant :
• Une communication d'informations (I) à travers un canal de communication (C) de type liaison radiofréquence entre plusieurs terminaux (T1; Tn) en proximité les uns aux autres ayant une synchronisation temporelle et fréquentielle, ces terminaux formant ainsi un réseau (R) synchronisé ;
• Et, pour chaque satellite en vue (S1), une collaboration entre terminaux (T1; Tn) du réseau (R) ainsi formé pour déterminer des paramètres dits de syntonisation du signal de navigation relativement à la référence commune de temps et de fréquence (H), cette collaboration comportant :
- une gestion du partage de leurs ressources respectives de manière à ce que chacun contribue aux calculs entrant dans la détermination des paramètres de syntonisation du signal de navigation ;
- ladite gestion du partage des ressources comprenant l'allocation d'une ou plusieurs tâches (P1; Pn) d'exploration en fonction des ressources de chaque terminal ;
- ladite allocation des tâches (P1; Pn) d'exploration comportant un partage de l'espace de recherche global en temps et en fréquence ;
- ledit partage de l'espace de recherche global en temps et en fréquence comportant des plages de recouvrement ;
- ledit partage de l'espace de recherche en fréquence comprenant la division en sous ensembles d'une plage de fréquences dans laquelle est susceptible d'être reçu le signal de navigation d'un satellite en vue ;
- ledit partage de l'espace de recherche en temps comprenant la division en sous ensembles d'une plage temporelle dans laquelle est susceptible de se trouver la phase du code d'étalement utilisé pour moduler la porteuse émise par un satellite en vue, relativement à une référence de temps ;
- la transmission par le canal de communication, des résultats obtenus pour l'obtention des paramètres de syntonisation du signal de navigation afin que les terminaux (T1; Tn) du réseau (R) se syntonisent sur le signal du satellite en vue.

2. Procédé d'acquisition selon la revendication 1, **caractérisé en ce que** :
- ladite gestion du partage des ressources est réalisée par un terminal maître apte à fractionner et à répartir de façon optimale les traitements entrant dans la mise en oeuvre d'une phase d'acquisition du signal de navigation, sur l'ensemble des ressources de calcul disponibles; **en ce que**,
- ladite transmission par ledit canal de communication comprend la transmission des résultats de traitements partiels par les différents terminaux du réseau afin que le terminal maître du réseau puisse déterminer les paramètres de syntonisation du signal de navigation et **en ce que**,
- ladite transmission comprend la transmission des paramètres de syntonisation du signal de navigation par le canal de communication, du terminal maître vers les autres terminaux du réseau afin d'assister la syntonisation de l'ensemble des terminaux sur le satellite en vue.

3. Procédé d'acquisition selon la revendication 2, **caractérisé en ce que** :
ladite gestion du partage des ressources comprend un terminal maître principal et un ou plusieurs terminaux maîtres secondaires aptes à se substituer au terminal maître principal en cas d'indisponibilité du terminal maître principal.

4. Procédé d'acquisition selon l'une quelconque des revendications précédentes, **caractérisé en ce que** la communication d'informations comprend en outre une communication d'informations d'assistance telles qu'une identification des satellites en vue, les signaux de syntonisation à savoir la fréquence et la phase de code des satellites en vue et, lorsqu'un message de navigation a été utilisé, ledit message de navigation.

5. Procédé d'acquisition selon la revendication 1 ou 4, **caractérisé en ce que** la communication d'informations comprend :
- une gestion de l'entrée et de la sortie d'un terminal du réseau et l'évaluation de sa proximité;
- et **en ce que** l'assistance est une assistance du réseau vers un terminal entrant, ou d'un terminal entrant vers le réseau.

6. Procédé d'acquisition selon la revendication 4, **caractérisé en ce que** l'assistance comprend la communication par une station de base distante du message de navigation au réseau.

7. Procédé d'acquisition selon l'une quelconque des revendications 1 ou 4 à 6, **caractérisé en ce que** la communication d'informations comprend un service de relais permettant d'acheminer les informations entre des terminaux éloignés du réseau en point à point, à travers des terminaux du réseau qui assurent alors en outre la fonction de relais de transmission.

8. Procédé d'acquisition selon la revendication 1, **caractérisé en ce que** la synchronisation temporelle des terminaux peut être absolue ou relative.

9. Terminal de navigation par satellite au moyen d'un système global de navigation GNSS, ledit terminal comprenant :
- un émetteur/récepteur (ER) lui permettant de communiquer en réseau à travers un canal de communication (C) de type liaison radiofréquence avec d'autres terminaux (T2; Tn) en proximité les uns aux autres pour transmettre des informations (I) permettant une collaboration entre terminaux dans l'acquisition du signal de navigation émis par tout satellite (S1) en vue,
- une référence de temps/fréquence (H) pour une synchronisation temporelle et fréquentielle avec les autres terminaux du réseau;
- un module de calcul (MC) apte à mettre en oeuvre une ou plusieurs tâches (P1; Pn) d'une phase d'acquisition en vue de l'acquisition d'un signal de navigation d'un satellite (S1) en vue,
- un module de gestion (MG) des informations communiquées, pour piloter le module de calcul (MC) afin de définir la ou les tâches (P1; Pn) à mettre en oeuvre, selon les informations communiquées par les terminaux (T2;Tn) du réseau, ledit module de gestion (MG) étant adapté pour :
- une gestion du partage des ressources respectives des terminaux du réseau de manière à ce que chacun des terminaux contribue aux calculs entrant dans la détermination des paramètres dits de syntonisation du signal de navigation ;
- ladite gestion du partage des ressources comprenant l'allocation d'une ou plusieurs tâches (P1; P2; Pn) d'exploration en fonction des ressources de chaque terminal ;
- ladite allocation des tâches (P1; P2; Pn) d'exploration comportant un partage de l'espace de recherche global en temps et en fréquence ;
- ledit partage de l'espace de recherche global en temps et en fréquence comportant des plages de recouvrement ;
- ledit partage de l'espace de recherche en fréquence comprenant la division en sous ensembles d'une plage de fréquences dans laquelle est susceptible d'être reçu le signal de navigation d'un satellite en vue ;
- ledit partage de l'espace de recherche en temps comprenant la division en sous ensembles d'une plage temporelle dans laquelle est susceptible de se trouver la phase du code d'étalement utilisé pour moduler la porteuse émise par un satellite en vue, relativement à une référence de temps ;
- la transmission par le canal de communication, des résultats obtenus pour l'obtention des paramètres de syntonisation du signal de navigation afin que les terminaux du réseau se syntonisent sur le signal du satellite en vue.

10. Terminal de navigation selon la revendication 9, **caractérisé en ce que** l'émetteur/récepteur est apte à recevoir ou à envoyer des informations d'assistance.

11. Terminal de navigation selon la revendication 9, **caractérisé en ce que** le module de gestion comporte une fonction relais de transmission pour le réseau constitué.

12. Terminal de navigation par satellite selon la revendication 9, **caractérisé en ce que** la référence temps/fréquence est réalisée par une horloge atomique miniaturisée.

## Patentansprüche

1. Verfahren für das Erfassen von Satelliten eines globalen Navigationssystems GNSS übertragener Navigationssignale durch Navigationsendgeräte (T1; Tn), wobei besagtes Verfahren umfasst:
• eine Kommunikation von Informationen (I) über einen Kommunikationskanal (C) des Typs Funkfrequenzverbindung zwischen mehreren in der näheren Umgebung befindlichen Endgeräten (T1; Tn), wobei eine temporäre Synchronisierung und Frequenzsynchronisierung stattfindet, wobei besagte Endgeräte dergestalt ein synchronisiertes Netz (R) bilden;
• und für jeden der betreffenden Satelliten (S1) ein Zusammenwirken zwischen Endgeräten (T1; Tn) des so gebildeten Netzes (R) zur Bestimmung sogenannter Synchronisationsparameter des Navigationssignals bezüglich der gemeinsamen Zeit- und Frequenzreferenzen (H), wobei besagtes Zusammenwirken umfasst:
- eine Verwaltung der Ressourcenteilung bezüglich der Art und Weise, in der jedes der besagten Endgeräte zu den Berechnungen beiträgt, die in die Bestimmung der Abgleichparameter des Navigationssignals eingehen;
- wobei besagte Verwaltung der Ressourcenteilung die Zuweisung einer oder mehrerer Abtastaufgaben (P1; Pn) in Abhängigkeit der Ressourcen eines jeden Endgeräts umfasst;
- wobei besage Zuweisung von Abtastaufgaben (P1; Pn) eine übergreifende Aufteilung des Suchbereichs nach Zeit und Frequenz umfasst;
- wobei besagte Aufteilung des Suchbereichs nach Zeit und Frequenz Überlappungsbereiche umfasst;
- wobei besagte Aufteilung des Frequenzsuchbereichs die Aufteilung eines Frequenzbereichs, der für den Empfang des Navigationssignals eines betreffenden Satelliten in Frage kommt, in Untergruppen umfasst;
- wobei besagte Zeitsuchbereichsaufteilung die Aufteilung eines Zeitbereichs in Untergruppen umfasst, der dafür in Frage kommt, darin die Phase des Verteilungscodes zu finden, der beim Modulieren des von einem betreffenden Satelliten gesendeten Trägersignals im Verhältnis zu einer Zeitreferenz gesendet wird;
- die Übermittlung der Ergebnisse, die durch das Erhalten der Abgleichparameter des Navigationssignals erhalten wurden, über den Kommunikationskanal, damit die Endgeräte (T1; Tn) des Netzes (R) mit dem Signal des betreffenden Satelliten abgeglichen werden.

2. Erfassungsverfahren nach Anspruch 1, **dadurch gekennzeichnet, dass**:
- besagte Verwaltung der Ressourcenteilung von einem Master-Endgerät ausgeführt wird, welches ausgelegt ist für das optimale Aufteilen und Verteilen der Verarbeitungsvorgänge, die in die Durchführung einer Phase des Erfassens des Navigationssignals eingehen, auf den Satz verfügbarer Berechnungsressourcen; weiterhin **dadurch gekennzeichnet, dass**
- besagte Übertragung über besagten Kommunikationskanal die Übertragung von Ergebnissen der von den verschiedenen Endgeräten des Netzes durchgeführten Teilverarbeitungsvorgänge, damit das Master-Endgerät des Netzes die Abgleichparameter des Navigationssignals bestimmen kann, und **dadurch gekennzeichnet, dass**
- besagte Übertragung die Übertragung von Abgleichparametern des Navigationssignals über den Kommunikationskanal vom Master-Endgerät zu den weiteren Endgeräten des Netzes umfasst, um den Abgleich des Endgerätesatzes mit dem betreffenden Satelliten zu unterstützen.

3. Erfassungsverfahren nach Anspruch 2, **dadurch gekennzeichnet, dass**:
besagte Verwaltung der Ressourcenteilung ein primäres Master-Endgerät und ein oder mehrere sekundäre Master-Endgeräte umfasst, die dafür ausgelegt sind, das primäre Master-Endgerät in dem Fall zu ersetzen, dass das primäre Master-Endgerät nicht verfügbar ist.

4. Erfassungsverfahren nach einem jeglichen der vorgenannten Ansprüche, **dadurch gekennzeichnet, dass** das Kommunizieren von Informationen weiterhin ein Kommunizieren von Hilfsinformationen wie zum Beispiel eine Kennung der betreffenden Satelliten, die Abgleichparameter, konkret die Frequenz und die Phase des Codes des betreffenden Satelliten und - wenn eine Navigationsnachricht verwendet wird, besagte Navigationsnachricht.

5. Erfassungsverfahren nach Anspruch 1 oder 4, **dadurch gekennzeichnet, dass** besagtes Kommunizieren von Informationen umfasst:
- ein Verwalten des Eingangs und des Ausgangs eines Endgeräts des Netzes und die Beurteilung seiner Nähe;
- sowie **dadurch gekennzeichnet, dass** das Unterstützen ein Unterstützen des Netzes in Richtung auf ein hinzukommendes Endgerät oder eines hinzukommenden Endgeräts in Richtung auf das Netz ist.

6. Erfassungsverfahren nach Anspruch 4, **dadurch gekennzeichnet, dass** das Unterstützen das Kommunizieren der Navigationsnachricht von einer entfernten Basisstation an das Netz umfasst.

7. Erfassungsverfahren nach einem jeglichen der Ansprüche 1 oder 4 bis 6, **dadurch gekennzeichnet, dass** das Kommunizieren von Informationen einen Relaisdienst umfasst, welcher das Weiterleiten der Informationen zwischen den abgelegenen Endgeräten des Netzes im Punkt-zu-Punkt-Modus über Endgeräte des Netzes ermöglicht, welche dann obendrein die Funktion eines Übermittlungsrelais erfüllen.

8. Erfassungsverfahren nach Anspruch 1, **dadurch gekennzeichnet, dass** die temporäre Synchronisation der Endgeräte absolut oder relativ sein kann.

9. Satellitennavigationsendgerät für ein globalen Navigationssystems GNSS , wobei besagtes Endgerät umfasst.
- einen Sender/Empfänger (ER), welcher ihm über einen Kommunikationskanal (C) des Typs Funkfrequenzverbindung das Kommunizieren mit weiteren in der näheren Umgebung befindlichen Endgeräten (T2;Tn) ermöglicht, um Informationen (I) zu übermitteln, die ein Zusammenwirken zwischen Endgeräten bei der Erfassung des Navigationssignals ermöglichten, das von jedwedem betreffendem Satelliten (S1) ausgestrahlt wird.
- eine Zeit-/Frequenzreferenz (H) für eine temporäre Synchronisierung und Frequenzsynchronisierung mit den anderen Endgeräten des Netzes;
- ein Berechnungsmodul (MC), das ausgelegt ist für das Ausführen einer oder mehrerer Aufgaben (P1; Pn) einer Phase des Erfassens hinsichtlich des Erfassens eines Navigationssignals von einem betreffenden Satelliten (S1),
- ein Verwaltungsmodul (MG) für die kommunizierten Informationen zur Steuerung des Berechnungsmoduls (MC) für das Definieren der auszuführenden Aufgabe(n) (P1; Pn) gemäß den Informationen, die von den Endgeräten (T2;Tn) des Netzes kommuniziert wurden, wobei besagtes Verwaltungsmodul (MG) ausgelegt ist für:
- eine Verwaltung der Ressourcenteilung bezüglich der Endgeräte des Netzes hinsichtlich der Art und Weise, in der jedes der besagten Endgeräte zu den Berechnungen beiträgt, die in die Bestimmung der Abgleichparameter des Navigationssignals eingehen;
- wobei besagte Verwaltung der Ressourcenteilung die Zuweisung einer oder mehrerer Abtastaufgaben (P1; P2; Pn) in Abhängigkeit der Ressourcen eines jeden Endgeräts umfasst;
- wobei besage Zuweisung von Abtastaufgaben (P1; P2; Pn) eine übergreifende Aufteilung des Suchbereichs nach Zeit und Frequenz umfasst;
- wobei übergreifende Aufteilung des globalen Suchbereichs nach Zeit und Frequenz Überlappungsbereiche umfasst;
- wobei besagte Aufteilung des Frequenzsuchbereichs die Aufteilung eines Frequenzbereichs, der für den Empfang des Navigationssignals eines betreffenden Satelliten in Frage kommt, in Untergruppen umfasst;
- wobei besagte Zeitsuchbereichsaufteilung die Aufteilung eines Zeitbereichs in Untergruppen umfasst, der dafür in Frage kommt, darin die Phase des Verteilungscodes zu finden, der beim Modulieren des von einem betreffenden Satelliten gesendeten Trägersignals im Verhältnis zu einer Zeitreferenz gesendet wird;
- und wobei besagtes Verwaltungsmodul (MG) weiterhin ausgelegt ist für die Übermittlung der Ergebnisse, die durch das Erhalten der Abgleichparameter des Navigationssignals erhalten wurden, über den Kommunikationskanal, damit die Endgeräte des Netzes mit dem Signal des betreffenden Satelliten abgeglichen werden.

10. Navigationsendgerät nach Anspruch 9, **dadurch gekennzeichnet, dass** der Sender/Empfänger ausgelegt ist für den Empfang oder das Senden von Hilfsinformationen.

11. Navigationsendgerät nach Anspruch 9, **dadurch gekennzeichnet, dass** das Verwaltungsmodul eine Relaisfunktion zur Übermittlung über das gebildete Netz umfasst.

12. Satellitennavigationsendgerät nach Anspruch 9, **dadurch gekennzeichnet, dass** durch einen atomaren Miniatur-Taktgeber eine Zeit-/Frequenzreferenz vorgegeben wird.

## Claims

1. A method of acquisition by navigation terminals (T1; Tn), of navigation signals broadcast by satellites of a GNSS global navigation system, said method comprising:
• A communication of information (I) through a communication channel (C) of a radio frequency link type between a plurality of terminals (T1; Tn) close to one another, having time and frequency synchronization, those terminals thereby forming a synchronized network (R)
• And, for each satellite in view (S1), a collaboration between terminals (T1; Tn) of the network (R) thereby formed in order to determine so-called syntonization parameters of the navigation signal relative to the shared time and frequency reference (H), the said collaboration comprising:
- management of the sharing of their respective resources so that each one contributes to the calculations involved in determining the synchronization parameters of the navigation signal;
- said management of the sharing of resources comprising the allocation of one or more exploration tasks (P1; Pn) based on the resources of each terminal;
- said allocation of exploration tasks (P1; Pn) comprising a sharing of the global time and frequency search space;
- said sharing of the global time and frequency search space comprising overlapping ranges;
- said sharing of the frequency search space comprising the division into subsets of a frequency range in which the navigation signal of a satellite in view is likely to be received;
- said sharing of the time search space comprising the division into subsets of a time range in which the phase of the spreading code used to modulate the carrier emitted by a satellite in view is likely to be found, relative to a time reference;
- the transmission by the communication channel of the results obtained for obtaining syntonization parameters of the navigation signal in order for the terminals (T1; Tn) of the network (R) to syntonize to the signal of the satellite in view.

2. An acquisition method according to claim 1, **characterized in that**:
- said management of the sharing of resources is carried out by a master terminal able to optimally divide and distribute the processing involved in implementing a navigation signal acquisition phase, across all of the available computing resources; **in that**,
- said transmission by said communication channel comprises the transmission of the partial processing results by the various terminals of the network so that the master terminal of the network can determine the syntonization parameters of the navigation signal; and **in that**,
- said transmission comprises the transmission of the syntonization parameters of the navigation signal by the communication channel, from the master terminal to the other terminals of the network in order to assist the syntonization of all the terminals to the satellite in view.

3. An acquisition method according to claim 2, **characterized in that**:
said management of the sharing of resources comprises a main master terminal and one or more secondary master terminals able to substitute for the main master terminal in the event that the main master terminal becomes unavailable.

4. An acquisition method according to any one of the preceding claims, **characterized in that** the communication of information further comprises a communication of assistance information such as an identification of the satellites in view; the syntonisation signals, namely the frequency and code phase of the satellites in view; and when a navigation message was used, said navigation message.

5. An acquisition method according to claim 1 or 4, **characterized in that** the communication of information comprises:
- a management of the input and output of a terminal of the network and the evaluation of its proximity;
- and **in that** the assistance is assistance from the network to an incoming terminal, or from an incoming terminal to the network.

6. An acquisition method according to claim 4, **characterized in that** the assistance comprises the communication of the navigation message by a remote base station to the network.

7. An acquisition method according to any one of the claims 1 or 4 to 6, **characterized in that** the communication of information comprises a relay service that makes it possible to route the information point-to-point between terminals far from the network, through terminals of the network that in such a case further serve as transmission relays.

8. An acquisition method according to claim 1, **characterized in that** the time synchronization of the terminals may be absolute or relative.

9. A satellite navigation terminal using a GNSS global navigation system, said terminal comprising:
- an emitter/receiver (ER) enabling it to communicate in a network over a communication channel (C) of the radiofrequency link type with other terminals (T2; Tn) in proximity to one another, in order to transmit information (I) enabling collaboration between terminals in the acquisition of the navigation signal emitted by any satellite (S1) in view,
- a time/frequency reference (H) for time and frequency synchronization with the other terminals of the network;
- a computing module (MC) able to implement one or more tasks (P1; Pn) of an acquisition phase in order to acquire a navigation signal of a satellite (S1) in view,
- a management module (MG) for the information communicated, to control the computing module (MC) in order to define the task(s) (P1; Pn) to be implemented, based on information communicated by the terminals (T2; Tn) of the network, said management module (MG) being suited for:
- managing the sharing of the respective resources of the terminals of the network so that each of the terminals contributes to the computing involved in determining the so-called syntonization parameters of the navigation signal;
- said management of the sharing of resources comprising the allocation of one or more exploration tasks (P1; P2; Pn) based on the resources of each terminal;
- said allocation of the exploration tasks (P1; P2; Pn) comprising a sharing of the global time and frequency search space;
- said sharing of the global time and frequency search space comprising overlapping ranges;
- said sharing of the frequency search space comprising the division into subsets of a frequency range in which the navigation signal of a satellite in view is likely to be received;
- said sharing of the time search space comprising the division into subsets of a time range in which the phase of the spreading code used to modulate the carrier emitted by a satellite in view is likely to be found, relative to a time reference;
- the transmission by the communication channel of the results obtained for obtaining syntonization parameters of the navigation signal in order for the terminals of the network to syntonize to the signal of the satellite in view.

10. A navigation terminal according to claim 9, **characterized in that** the emitter/receiver is able to receive or send assistance information.

11. A navigation terminal according to claim 9, **characterized in that** the management module comprises a transmission relay function for the network crated.

12. A satellite navigation terminal according to claim 9, **characterized in that** the time/frequency reference is in the form of a miniaturized atomic clock.
